# EUROPEAN PATENT SPECIFICATION

(11) **EP 0 969 975 B1**
(45) Date of publication and mention of the grant of the patent: **30.10.2002**
(21) Application number: 98913892.0
(22) Date of filing: 27.03.1998
(51) Int. Cl.: B44C 1/17, C03C 17/00

(54) **GLASS TREATMENT PROCESS AND APPARATUS**
VERFAHREN UND VORRICHTUNG ZUR BEHANDLUNG VON GLAS
PROCEDE ET APPAREIL DE TRAITEMENT DE VERRE

(30) Priority: 27.03.1997 GB 9706427
(43) Date of publication of application: 12.01.2000
(73) Proprietor: Decalite Limited, Sheffield S11 8NX (GB)
(72) Inventor: PEARSON, David, Sheffield S11 8NX (GB)
(74) Representative: Orr, William McLean
(86) International application number: GB9800803
(87) International publication number: WO98043832

(56) References cited:
- EP-A- 0 170 472
- WO-A-95/15267
- WO-A-96/07551
- GB-A- 2 032 417
- US-A- 5 397 410
- US-A- 5 669 951

## Description

This invention relates to a process for the treatment of glass, and to apparatus for carrying out the treatment.

The type of treatment of glass with which the invention is concerned is the application of decorative coating material to the surface of a glass substrate, so as to provide any required visible (decorative) appearance to the glass.

The glass substrate therefore provides the necessary strength to the composite article (the substrate plus the decorative coating), and the only requirement of the decorative coating is that it can remain secured to the surface of the glass substrate throughout the required "life" of the article, and can withstand any environmental factors to which it may be exposed in use, and which may tend to separate the coating from the substrate. In other words, a durable decorative coating for a glass substrate is required, and which can be applied to the glass substrate in an easy and reliable manner, and without adversely affecting the structural integrity of the substrate.

The present invention has been developed primarily in connection with the coating of glass substrates for architectural use e.g. as windows in buildings or in glass, in which case the coating will usually be on the inside face of the substrate. Alternatively, for other uses, e.g. in shower screens, the coating will usually be on the outside face of the substrate. Other possible uses will include use in the automotive industry.

It is of course well known to apply paper or vinyl based decorative sheets to glass substrates, using suitable adhesives, and which can be acceptable for indoor use, but such sheets are not durable and can only remain attached to a glass substrate on a temporary basis.

For external use on buildings, a decorative effect on structural glass sheets can be obtained on a commercial basis by expensive "tinting" procedures in which suitable colouring material is incorporated into the constituent materials from which glass is made. This requires careful control over the mixing process, so as to achieve substantially uniform tinting of the glass, and in addition to being expensive, this does not give any flexibility in enabling decorative effects to be achieved which are other than uniform colour tinting throughout the glass. Alternatively, a required decorative effect can be achieved by surface printing with ceramic or enamel inks. However, due to registration problems printing in more than one colour is very difficult.

It is already known to apply durable coatings to glass sheets which are incorporated into a "a wall or walls" of a squash court (or similar), in which spaced dots of ceramic ink are applied to the surface of the sheets in such a way that, (1) to players in the court the inside face of the wall appears opaque and (2) to spectators externally of the court and looking in, the wall appears transparent.

The use of transparent / opaque glass walls in sports courts has proved to be very successful commercially, and has enabled large numbers of spectators to view sports activities which would not previously have been possible. The coating must be applied to the glass substrate in a way such that it is durable, since the coating will be exposed to repeated impact by the ball, and also to occasional heavy impact of a player against the wall.

The required series of dots are applied by a printing technique, in which ceramic ink dots are applied to a water based transfer or slide paper, and then are transferred to the surface of the glass. Immersion of the paper in water allows the ink dots to be transferred to the surface like a "transfer", and which remain temporarily adhering to the glass in required positions which are determined by entirely manual techniques.

An example of water-based transfer decals is given in EP-A-170472. To achieve the required transparent / opaque properties, a pattern of 1mm alternate clear and white dots is printed, and also behind the white dots a black dot is printed. This has the effect, inside the court, with the bright lights shining on the white dots, of making the inside facing surface appear opaque to the player, whilst on the other side of the glass, the spectator in darkness looking into the bright court through the printed clear dots and black side of the white dots, sees the wall as being transparent.

After the transfer and temporary positioning of the dots on the glass surface, the glass substrate is then subjected to a normal "tempering" process of the type used to make toughened glass. The technique of tempering glass will be well known to those of ordinary skill in the art of glass technology, and need not be described in detail herein.

A key factor in the success of this technique (durable coating of a glass substrate), is that the ceramic ink "dots" which are transferred to the glass surface become fused to the glass during the subsequent tempering process to which the substrate is required to be subjected, bearing in mind the load factors which it will be required to withstand in service.

However, while this technique has proved to be a commercial success, and of benefit to customers, it is a somewhat specific application of a technique for applying durable coatings to a glass substrate, and which require significant manual skills, and particularly in the transfer of the ceramic ink dots to the glass substrate, prior to tempering. This means that the production time is dependent on manual skills, and the quality of the coating is dependent on the attention devoted to the task by the person exercising these skills. This is acceptable commercially for this specific application, but is not a viable technique for larger scale application of decorative coatings to glass substrates, of the type with which the invention is concerned.

Thus, the use of water slide transfers necessarily requires manual operations, and which is acceptable for transfer of small areas of image on a repeated basis, but is not acceptable for large volume commercial processes. Also, production size at the moment is limited to single sheets approximately 60 x 80cm.

The technique of using screen printed water slide transfers has also been used for many years in the pottery and chinaware industry (to apply transfers which are subsequently baked on to the article), and the necessary manual skills required is acceptable in that industry for quality work. Indeed the technique for applying the ceramic ink dots to glass walls in squash courts was derived from that industry, being unique at that time in applying water slide transfers to tempered glass products.

However, as an initial attempt to broaden the concept of transfer of ceramic ink dots, and subsequent fusing to the surface of the glass during the tempering process, there is an existing technique which effectively enables printing "in colour" to be applied to windows as substantially permanent decorative coatings, and in this technique a water slide transfer or "decal" and subsequent tempering process has been used, and in which first of all a solid image is printed i.e. a full coating of the glass substrate, and then subsequently the image is perforated with similar 1mm holes (to allow viewing outwardly through the windows). Thereafter, the perforated image is transferred to the substrate by a manually controlled water-slide technique. Apart from being the negative of the all over printed concept, this had the advantage of doing away with the registration problem of printing a number of colours on top of each other, as the printing of solid colours could be done first, and perforated afterwards, so as to see through it.

However, while this extension of the squash court technique has become accepted by major glass manufacturers, and is commercially viable, it still relies upon the use of water slide transfers or decals, and therefore manual skills, with the disadvantages as to time of production and labour costs which this involves.

There does therefore exist a clear need to provide an improved glass treatment process, whereby durable decorative coatings can be applied, and in a way which allows automated production techniques to be utilised, while maintaining reliability and accuracy of placement of the printed images on the substrate. Also, it will be desirable to allow use of image sheets up to as large as, but not limited to 2.2 metres wide, and as a continuous loop such as by the web printing method.

The present invention addresses this requirement, and utilises a unique combination of process and apparatus feature to achieve the required objectives.

The invention therefore utilises a different type of transfer bearing any required image(s), and which can be applied to and fixed to a glass substrate prior to tempering of the glass in a way which allows the process to be automated, so as to increase the rate of production while still maintaining a satisfactory quality of image after transfer and subsequent adhesion to the glass substrate as a consequence of a heat treatment process.

According to a first aspect of the invention there is provided an automated method of decorating a face of a flat glass sheet, including the steps of:
continuously feeding glass sheets and heat release decals on a decal carrier to a laminating station;
applying heat to the decal carrier so as to simultaneously release the decal from the carrier and deposit the decal on an exposed face of a respective sheet of glass continuously passing through the laminating station;
continuously transferring decal-deposited glass sheets to a decal-securing accumulator oven;
slowly heating the glass sheets to a predetermined temperature so as to remove all binding agents from the decal and to fix the decals to the glass sheets thereby decorating the glass sheets.

Preferably, the predetermined temperature is such as to fix the decals to the glass sheets so as to fuse the decals to the glass sheets and cure the decal so as to gloss up the colours of the decal.

The method may include the steps of:
slowly cooling the decorated sheets in the decal securing oven; and
continuously feeding decorated glass sheets to a tempering furnace and rapidly heating and cooling the decorated glass sheets so as to temper the decorated glass sheets, fuse the decals to the glass sheets and cure the decal so as to gloss up the colours of the decal.

Preferably the method includes the step of pre-heating the glass sheets so that the glass sheets have a predetermined temperature when the decals are deposited on them so as to enhance adherence of the decals to the glass sheets.

The decals deposited on the glass sheets may be perforated so that the decorated glass is substantially transparent when viewed in one direction and substantially opaque when viewed in the opposite direction.

The decals on the decal carrier may be perforated. Preferably, the decals on the decal carrier are not perforated and become perforated as the decals are removed from the decal carrier and are deposited on the glass sheets.

The method may include the step of coating the glass sheet with an intermittent layer of heat release agent in a predetermined pattern and onto which the decal is deposited so that when the glass sheet is heated in the decal securing accumulator oven, the heat release agent prevents part of the decal from fusing to the glass sheet so as to provide a decorated glass sheet which is substantially transparent when viewed in one direction and substantially opaque when viewed in the opposite direction.

Preferably, the heat release agent is heat activated to remove part of the decal after the decal has fused by evaporating through the fused decal. Preferably the heat release agent allows part of the decal to be removed after the decal has fused by preventing the decal from adhering directly to the surface of the glass sheet. Preferably, part of the decal is removed by dissolving the heat release agent.

Preferably, the heat release agent is a wax with a melting or evaporation temperature higher than the fusing temperature of the decal

The method may include the step of providing decals having an intermittent layer of heat release agent having a predetermined pattern so that when the decal is heat released from the decal carrier only part of the whole decal on the decal carrier is deposited on the glass sheet so that the deposited decal renders the glass sheet substantially transparent when viewed in one direction and substantially opaque when viewed in the opposite direction.

According to a second aspect of the invention there is provided an automated decorated glass sheet production line for decorating a face of a glass sheet comprising:
glass feeding means for feeding glass sheets successively to a laminating station;
decal feeding means for feeding heat release decals on a decal carrier to a laminating station;
a heating device arranged at said laminating station for receiving said decal carrier and each glass sheet and the heating device being operable simultaneously to effect heat release of a decal from the decal carrier and to deposit the decal on an exposed face of each respective glass sheet;
intermediate glass feeding means for feeding decal deposited sheets to a decal securing accumulator oven; and
heating means in said decal securing accumulator oven operative slowly to heat each decal deposited sheet to a predetermined temperature so as to remove all binding agents from the decal and fix the decal to the respective glass sheet and thereby decorate the sheet.

The predetermined glass surface temperature may not be more than approximately 520°C. Preferably, the predetermined glass surface temperature is sufficient to fuse the decal to the glass sheets and cure the decal so as to gloss up the colours of the decal. The predetermined glass surface temperature may be approximately 570°C.

The production line may have a tempering furnace arranged downstream of said decal securing accumulator oven and having heating means for heating decorated glass sheets to a tempering temperature so as to temper the decorated glass sheets, fuse the decal to the glass sheets and cure the decal so as to gloss up the colours of the decal.

The production line may have an upstream pre-heating furnace for continuously receiving glass sheets and heating them to a pre-heating temperature and discharging pre-heated glass sheets to the glass transfer means, in which the pre-heating temperature is chosen so as to enhance adherence of the decals to the glass sheets. Preferably, the preheating temperature of the glass sheets is approximately 120°C.

The heating device arranged at the laminator station may be a roller. The roller may be a silicon covered roller.

The production line may decorate glass sheets having a width of approximately 2.2m.

Preferably, the decal securing accumulator oven has a plurality of different levels, and the production line has a lifting device preceding the decal securing accumulator oven with a lift which continuously accepts decal deposited glass sheets and transfers them to one of the plurality of different levels in the decal securing accumulator oven.

A preferred embodiment of the invention will now be described, by way of non-limiting illustration only, with reference to the accompanying drawings, in which:
Figure 1 is a perspective view of an automated decorated glass sheet production line according to the invention;
Figure 2 is a schematic partial cross sectional view through the glass production line of the invention;
Figure 3 is a schematic cross sectional diagram, not to scale, illustrating a heat release decal on a decal carrier for use in the invention; and
Figure 4 is a flow chart illustrating an automated method of decorating glass sheets according to the invention.

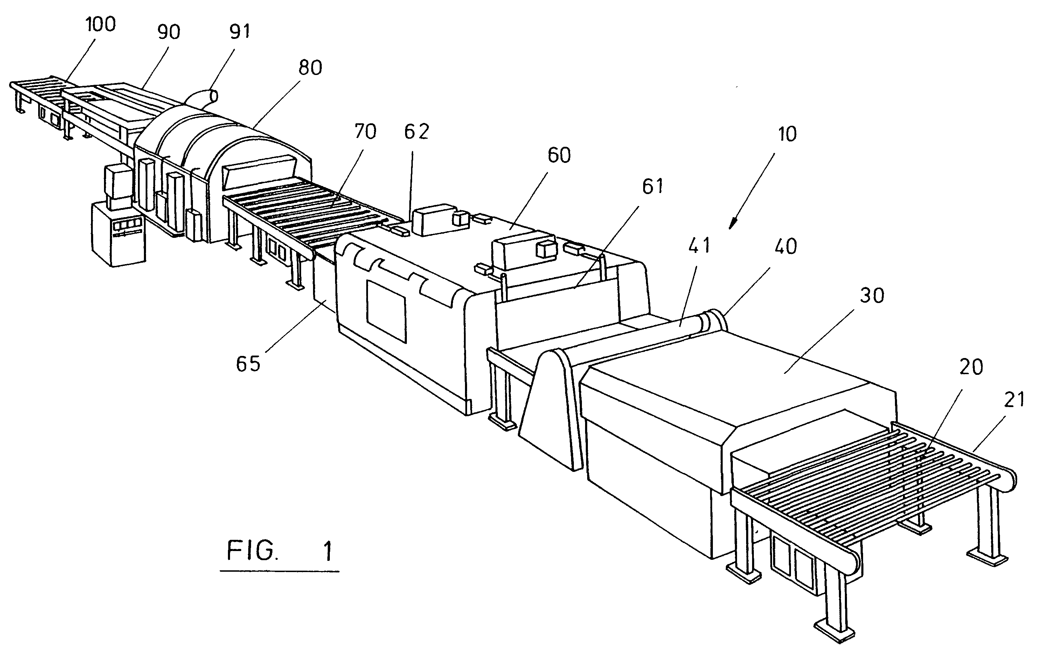

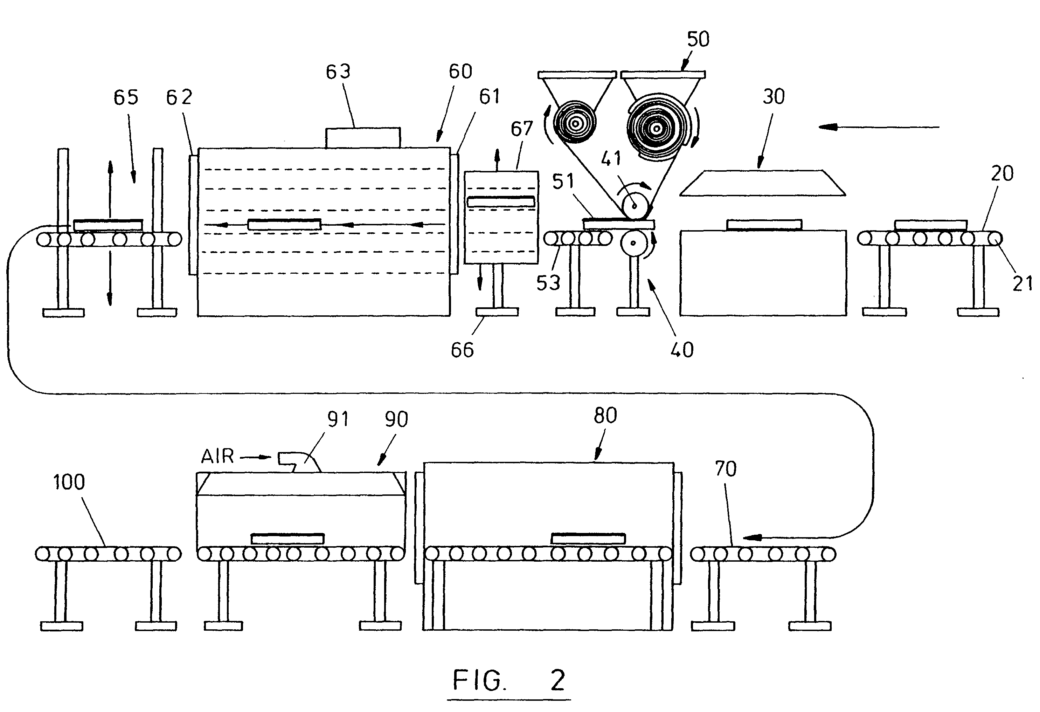

With reference to Figures 1 and 2, there is shown an automated decorated glass sheet production line, designates generally by reference numeral 10. The production line 10, operates from right to left as shown in Figure 1. Preferably the production line is configured to handle sheets of glass with widths of up to 2.2m and having lengths of up to 4m. The same items in different Figures share common reference numerals.

The production line has glass feeding means in the form of a loading table 20 approximately 2-4m long, for receiving glass sheets to be decorated. The loading table has positioning means 21 to allow the glass sheets to be correctly positioned. Preferably the positioning means are in the form of rubber ball castors to facilitate the position of the glass sheet, although rollers are shown in Figure 1. The glass feeding means may have powered transport means (not shown) so as to automatically feed glass sheets into the production line.

The production line then has a pre-heating furnace 30 approximately 4m long. The pre-heating furnace has infrared heating means and temperature control apparatus to allow the glass leaving the furnace to be controlled to have a predetermined pre-heating temperature. The pre-heating temperature is selected so as to enhance adherence of a decal to an exposed surface of respective glass sheets as will be described later.

The pre-heating furnace is followed by a laminator station 40. The laminator station is approximately 0.5m long and has a heating device 41 in the form of a silicon covered heated roller. Decal feeding means 50 are also provided but are not shown in Figure 1 for the sake of clarity The decal feeding means has decals 51 on a decal carrier 52 as will be described in detail later on. Intermediate glass feeding means 53 in the form of a powered roller table approximately 2-4m long accepts decorated glass sheets from the laminator station.

A decal securing accumulator oven 60 follows the intermediate glass feeding means. A lifting device 66, not shown in Figure 1, is located between the intermediate glass feeding means 53 and the decal securing accumulator oven. The accumulator oven is approximately 4-16m long. The decal securing oven has an entrance door 61 and an exit door 62 and exhaust means 63 for venting gases generated during the decal-securing operation. The accumulator oven has a series of four zones each having different respective ambient temperatures. Each zone has heating means and associated temperature control apparatus to control the ambient temperature of each zone at respective predetermined temperatures so as to heat the surface of the glass sheets to a predetermined temperature. Each of the four zones has a rack with six levels on it, each level consisting of a surface of powered rollers which can accept a decal deposited glass sheet. The rollers of the first, second and fourth zones are preferably chrome plated and those of the third zone are preferably made of a ceramic material. The four zones of the accumulator oven may be modular so that zones can be removed or added to customise the accumulator oven for specific purposes and/or lengths of glass sheets.

Typically, the breakage level in glass processing is of order 2-3%. So as to be able to remove broken glass sheets from the accumulator oven, each level of each zone is provided as a tray so that each level of each zone can be independently moved out the side of the oven to allow broken glass sheets to be removed from the oven without having to move or interfere with the other glass sheets being processed by the production line.

The lifting device 66 has a lift 67 having six levels of powered rollers similar to the levels in the accumulator oven. By appropriate control of the position of the lift in the lifting device and control of the powered rollers on the different levels of the zones, decal decorated glass sheets can be accepted from the intermediate glass feeding means and treated to a desired heating cycle as they pass through the accumulator oven. In this way the accumulator oven acts as a buffer so that decal deposited glass sheets can be continuously accepted and fed through the decal securing oven in a non hatch processing manner.

Decorated glass sheets issue from the decal securing oven to an intermediate table 65 approximately 1.5-4m long which is height adjustable so as to accept decorated glass sheets from the different levels of the accumulator oven. A further glass feeding means 70 approximately 1.5-4m long is provided downstream of the decal securing oven. The production line then has a tempering furnace 80 downstream of the decal securing accumulator oven which is automatically supplied with decorated glass sheets by the further glass feeding means. The tempering furnace has heating means and temperature control apparatus (not shown) to control the temperature of the glass sheets passing through the tempering furnace. A quench section 90 follows the tempering furnace and has cooling means 91 in the form of a fan blower for quenching the decorated glass after it leaves the tempering furnace. Finally an unloading table 100 is provided for final inspection of the decorated tempered glass sheets.

The whole production line has control apparatus associated with it (not shown) so that the entire decorating and tempering process is automated and continuous. The loading table 20 to the intermediate table 65 all have motorised glass transport means so that the glass travels through these stages at a speed of approximately 3m min⁻¹ (0.05m s⁻¹). The total length of the decorating section of the production line is approximately 14-40m. The total length of the tempering section, from the further glass transfer means 70 to the unloading table 100 is approximately 20m. It will be appreciated that the stacking of glass sheets in the decal securing oven provides a buffering effect allowing the individual glass sheets to be stationary in the decal securing oven while maintaining a continuous flow through the decorating section of the production line at the average speed of 3m min⁻¹.

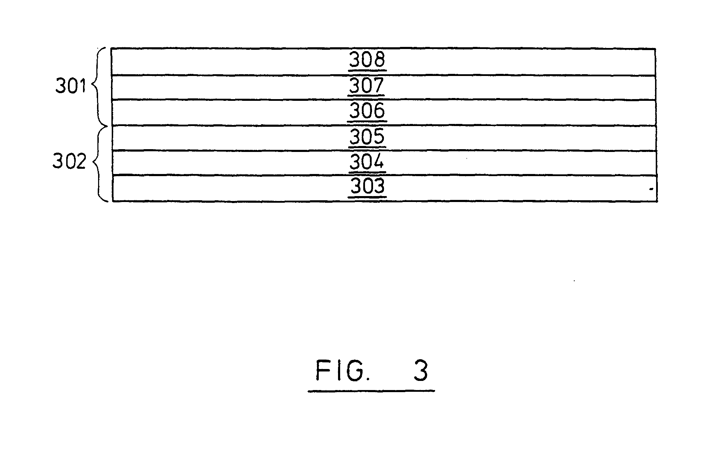

Before describing the automated method of decoration of glass sheets, the decal and decal carrier will be described with reference to Figure 3. Although a web of decal carrier is illustrated in Figure 2, individual sheets of decal carrier bearing a decal or decals are also envisaged as an alternative. Individual sheets of decal carrier may be butt joined to provide a web of decal carrier. It is considered within the knowledge of a skilled man how to adapt the decal feeding means illustrated so as to be suitable for single sheets of decal carrier.

A decal 301 on a decal carrier 302 is schematically shown in cross section in Figure 3 and generally designated by reference numeral 300. The decal carrier 302 is a releasable backing and has three component layers. A bottom paper layer 303, chosen with appropriate properties; e.g. to have an appropriate thickness to allow heat to pass through it and to have a suitable dimensional stability. A prime coating 304, or barrier layer, on the paper and a layer of heat release agent 305. The barrier layer renders this side of the paper less porous and substantially impervious to the heat release agent. The barrier layer may be in the form of a seal coating such as starch casein, glue, alkali metal silicate, water glass or other alkali metal silicates having a filler dispersed in it. The barrier layer material must be stable and relatively unaffected by temperature. The barrier layer also results in a more smooth and uniform heat release agent layer.

Preferably, the heat release agent is in the form of a relatively high melting point wax of vegetable or mineral origin. A more suitable wax is a polyethylene glycol (PEG) having a high molecular weight of at least 1000, e.g. CARBOWAX (trade mark) 4000 and 6000 compounds. Suitable waxes have relatively slight solubility and resistance to penetration by petroleum hydrocarbons. Also the ability to burn without excessive carbon deposition is preferred. Normally solid polyethylene glycols can have softening points in the approximate range 65-180°C so that they can provide the required heat release properties.

The decal carrier 302 may loosely be referred to just as paper.

A decal 301 corresponding to an image which it is desired to decorate the glass sheets with is printed in reverse on the paper in ceramic ink. A down coat, raft coat or synonymously a base coat 306 comprising a clear resinous film is first deposited on top of the heat release agent and then the image 307 is printed in reverse onto the base coat. The base coat serves as an imprint receiving support for the ceramic ink. The base coat is preferably formed from the same organic medium which provides the body portion, or binding agent, of the printed image. The base coat may comprise a plasticized acrylic resin, e.g. a polymerized acrylic resin or a polymethyl methacrylate resin.

The image is preferably silk screen printed or alternatively lithographic off set printing may be used. The image 307 may be printed using four colour printing, individual spot colour printing or a mixture of the two, augmented four colour printing. It will be understood that the printed design will usually comprise a compound or composite layer including a plurality of different ceramic colour compositions arranged to provide the desired image.

Finally a layer of thermoplastic or heat activated adhesive 308 is deposited on the printed image to serve as a temporary binder to the glass sheet. The heat activated adhesive typically comprise methacrylate resins or cellulose derivatives and include a heat activated plasticiser. Suitable thermoplastic or heat activated adhesive materials include maleate resin and polyvinyl methyl ether.

Ceramic inks use for printing the decals are typically 40% binder agent and 60% solvent, depending on, e.g., the printing process used and the paper. Typical binding agents used are acrylic resins such as methacrylate resins or cellulose derivatives, such as cellulose ester or ether. Typical solvents used are low vapour pressure organic solvents such as ethylene glycol monobutyl ether with a suitable plasticiser.

The binder deposited on paper when the solvent has evaporated has a typical composition of one part binder to two parts ceramic colour. The binder, or vehicle for the ceramic colours, is preferably chosen so as to have a softening point well above that of the heat release agent and one which decomposes, i.e. evaporates, rapidly rather than passing through an extended liquid phase. Further the binder should volatilize, i.e. burn off, completely before the vitrifiable components of the ceramic colour begin to soften or melt. The ceramic colour has a typical composition of 1 part pigment to nine parts glass frit. Typically, metal oxides are used as the pigment and glass frit is essentially finely ground glass.

The decorated glass sheet can be made to be substantially transparent in one direction and substantially transparent in the opposite direction by providing suitable perforations in the image on the glass sheet. This has been achieved before on small sheets but not on large tempered glass sheets suitable for use in the architectural and automotive industries. The glass sheet appears opaque when viewed in one direction because light is reflected to the viewer from a reflective part, e.g. a white coloured part, of that side of the image and so the viewer does not recognise the presence of holes in the image. The opposite side of the image has a less reflective part, e.g. a black coloured part, and so less light is reflected back to the viewer when viewed from the opposite direction. As light is not reflected back to the viewer, the viewer only sees the light transmitted through the perforations in the image and so the decorated glass sheet appears substantially transparent. Use of the production line in the production of one-way transparent decorated glass will be discussed further later.

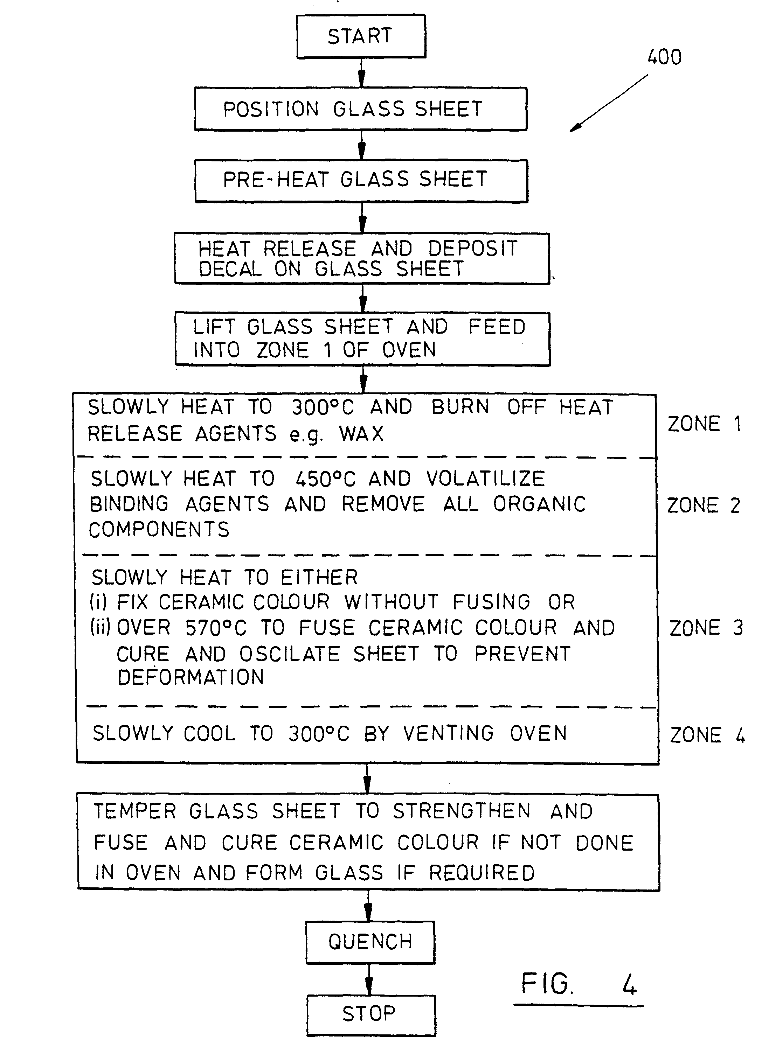

The method of production of decorated glass sheets according to the invention will now be described with reference to Figures 2 and 4. Figure 4 shows a flow chart, generally designated by reference numeral 400, illustrating the method.

A sheet of glass approximately 2.2m wide is washed and dried and correctly positioned on the loading table 20. Rubber ball castors help correctly position the glass sheet. The production line is started and the glass sheet is automatically transferred at a rate of 3mmin⁻¹ (0.05ms⁻¹) to the pre-heating furnace 30. The pre-heating furnace is controlled so as to heat the surface of the glass to a pre-heating temperature of approximately 120°C. The pre-heating temperature is chosen so as to enhance the adherence of the decal to the glass sheet.

The pre-heated glass sheet then passes to the laminating station 40. Decal feeding means 50 feed decals 51 on a decal carrier 52 to the laminating station. The decals on the decal carrier pass under a silicon covered heated roller 41 which simultaneously heat releases the decal from the decal carrier and deposits the decal directly on an exposed surface of the glass sheet. The heated roller softens the heat release agent 305 thereby releasing the decal from the paper. The preheated glass sheet activates the heat activated adhesive layer 308 on top of the ceramic ink image 307 which helps to adhere the decal image on to the exposed surface of the glass sheet. The heated roller alone may be sufficient to activate the heat activated adhesive layer owing to heat passing from the heated roller through the decal carrier 302 and decal 301. As the image is printed in reverse on the paper, the image deposited on the glass sheet is the correct way round.

The decal deposited glass sheet is then automatically transferred by intermediate glass feedings means 53 to the lifting device 66 and on to the decal securing accumulator oven 60 for a slow heating process. The slow heating process can last approximately 20 minutes in total. However, the duration of the slow heating process is determined by the amount of time it takes a sheet to be fired in each zone to reach the desired state of the decal.

The decal deposited glass sheet is received by a level of the lifting device. The glass sheet is then lifted to a height corresponding to an empty level in the first zone of the decal securing accumulator oven. The door of the oven opens and the decal deposited glass sheet is fed onto the level of the first zone of the decal securing accumulator oven. The sheet will remain on this level as it passes through the four zones of the oven.

As the lifting device has the same number of levels as the oven a free level of the lifting device will always be available to accept a sheet from the intermediate glass feeding means and lift, or lower, it to the height of a free level in the first zone. Once a glass sheet has been heated to the required temperature for the required time, it is automatically transported to the next zone of the oven. Hence, a level of zone one periodically empties and the lifting device transports a glass sheet to the most convenient empty level in zone one. It will be appreciated that the separation of sheets on the production line, number of levels of the oven and lifting device, not necessarily the same, and the time taken for the decal securing heating process, can be arranged so that the process is automated and continuous; i.e. a non batch process.

The first zone of the decal securing oven is controlled to have an ambient temperature of approximately 300°C. The actual surface temperature of the glass sheets throughout the decal securing oven is in fact approximately 30-70°C below the ambient temperature of each zone. In the first zone, as the glass temperature approaches 200°C any heat release agent wax on the decal start to boil off and is removed from the deposited decal. Between 200-250°C the resins used in the binder and in the heat activated adhesive start to decompose. The resins are chosen so that they decompose into monomers and so the monomers do not disturb the deposited image as they pass through the decal and evaporate off. After the glass sheet has been heat treated in the first zone it is automatically transported to the second zone.

The second zone has an ambient temperature of approximately 450°C. The second zone completes the decomposition and evaporation of all binding agents, e.g. the organic components, of the decal so that only the ceramic colour, i.e. glass frit and colourant, remain. An exhaust 63 automatically removes the organic gases and material from the oven.

The decal deposited glass sheet is then transferred to the third zone which has an ambient temperature of approximately 600°C. At this stage the decal image consists of only glass frit and metallic oxide pigment. Above a glass surface temperature of approximately 570°C the decal begins to fuse to the glass sheet and the decal begins to cure so that the colours of the decal image in the finished product take on a glossy appearance; i.e. gloss up. If the decal is not cured then the colours of the decorated sheet do not take on the glossy appearance required. However, at a surface temperature of approximately 520°C, and varying according to the type of glass of the glass sheet, the glass sheet starts to become plastic and deform. Hence, if it is not intended to subsequently temper the glass sheet and the decal needs to be fused and cured, then the glass sheet can be oscillated backwards and forwards on the ceramic rollers so that it maintains its flatness. Moving the glass sheet backwards and forwards by oscillating the rollers means that all the bottom surface of the glass sheet is effectively supported by the rollers and so deformation of the glass sheet is obviated. Hence, the glass sheet can be held in this zone of the oven and the temperature of the glass sheet controlled to be sufficient to fuse the glass frit to the glass sheet and bond the pigment to the glass sheet so that the decal image is securely and permanently fused to the glass sheet and also cure the decal so that the resulting colours gloss up.

If tempering is to be carried out then the image may be merely fixed to the glass sheet in the third zone without fusing it, or curing the decal, so that the image is finally fused to the glass sheet when the decorated glass sheet is eventually tempered. The decorated sheet is then transferred to the fourth zone which has its ambient temperature of controlled so that the surface temperature of the glass sheet is slowly cooled to approximately 300°C. Venting of the oven to allow the organic components of the binding agents to exhaust provides a means of controlling the ambient temperature so as to slowly cool the decorated glass sheets. The decorated glass sheets need to be cooled in order to prevent thermal shock from damaging the decorated sheets as they leave the oven.

The exit door 62 of the oven is opened and the decorated glass sheet is transferred onto the intermediate table 65, which is height adjustable, before automatically being transferred to the tempering furnace 80 by the further glass transfer means 70. The tempering furnace is controlled to heat the decorated glass sheet to a temperature of approximately 670-700°C. Tempering begins at a glass surface temperature of approximately 620-625°C.

The radiant energy inside the tempering furnace can typically be of the order of 650°C to 705°C, or even up to 735°C in the case of specific designs of tempering furnace. Depending upon the thickness of the decorated glass sheet which issues from the tempering furnace, the following typical values may be obtained, giving acceptable results:

| Thickness of coated sheet | Exit surface temperature |
|---|---|
| 3mm | 630°C |
| 4mm | 622°C |
| 6mm | 615/618°C |
| 12mm | 608°C |
| 15/19mm | 600°C |
| 19/25mm | 595°C |

If the decal image has merely been fixed in the decal securing furnace then the decal is now fused to the glass sheet in the tempering furnace and the decal is cured to gloss up the colours. The glass sheet is held at this temperature for approximately 40 seconds per millimetre thickness of the glass sheet and then quenched by passing from the tempering furnace to a quench section 90 at which a blower blows air onto the decorated glass sheet to quench it and complete the tempering cycle. The decorated tempered glass sheet is then transferred to an unloading table 100 for inspection of the decorated glass sheet.

As discussed earlier one-way transparent glass sheets may be produced by providing a suitable perforated image on the glass sheets. A number of methods can be used in connection with the production line and method of the invention.

A perforated decal image may be printed on the decal holder during manufacture of the decal and decal holder. A desired image is scanned into a computer and stored as data. The data is then processed to provide data corresponding to a suitably perforated image which is stored. The perforated image data is then used to control the printing of a perforated decal using techniques such as silk screen, or off set lithographic, four colour, spot colour or augmented four colour printing with ceramic inks. In this way the decal is pre-perforated on the decal holder and a perforated image is transferred from the decal holder onto the glass sheet.

Rather then pre-perforating the image, the image can be perforated during the decoration process by using a pre-coating stage. If it is required to form a regular pattern of holes in the fused on image, then the glass sheet has a pattern of dots of heat release material, e.g. wax or grease, arranged spaced apart by, e.g., 1.5mm. This pre-coated intermittent layer of heat release material prevents parts of the decal from being deposited directly onto the surface of the glass sheet. The heat release material is selected to have particular temperature dependent properties as will be discussed later. The decal is deposited onto the intermittent layer of heat release material and the process proceeds as described previously.

At least two methods of perforation can be used. In a first method, the temperature at which the heat release material evaporates is selected to be higher than the fusing temperature of the decal. The decal is fused to the glass sheet in the decal securing oven, trapping the dots of heat release material between the fused image and the top surface of the glass sheet. As the temperature of the glass sheet increases, the release agent evaporates and forces its way through the fused ceramic image to form holes in the image corresponding to the pattern of dots printed on the glass sheet.

In a second method, similar to the first, the glass sheet is not heated above the evaporation temperature of the heat release agent, but rather the fact that parts of the ceramic image are not fused or fixed directly to the surface of the glass sheet is used. The heat release agent is selected so as to be solid at the fusing or fixing temperature of the ceramic image. Those parts of the ceramic image lying on dots of heat release agent do not fuse or fix to the surface of the glass sheet. The glass sheet passes through the decal securing oven and the decal image is either fused or fixed. The decorated sheet is then subjected to a wash process in which those parts of the image deposited on the heat release agent dots are removed from the glass sheet. The wash process may be mechanical in which the parts of the ceramic image on the heat release agent are scraped off the glass sheet or a suitable solvent may be used to dissolve the heat release agent and remove the corresponding parts of the image.

Instead of pre-perforating the decals or pre-coating the sheets, the decals may be perforated as they are released from the decal carrier and deposited on the glass sheet. In this deposition perforation method, the decal carrier is specially prepared. With reference to Figure 3, instead of having a continuous layer of heat release agent 305 an intermittent layer of heat release agent is provided on the decal carrier. A pattern of heat release agent corresponding to the pattern of ceramic ink it is intended to deposit on the glass is provided on the decal carrier. The decal is then printed on top of the intermittent layer of heat release agent as previously. Then, when the decal is presented to the surface of the glass sheet at the laminator station, only those parts of the decal deposited on the heat release agent will be transferred to the glass sheet with the remainder of the decal remaining on the decal carrier as those parts are not heat releasable from the decal carrier.

It will be appreciated that any pattern of heat release agent may be provided on the decal carrier. In order to provide a perforated ceramic image, a perforated layer of heat release agent should be provided. Those parts of the decal printed onto the perforations in the heat release agent layer will remain on the decal carrier and so the decal will be simultaneously perforated and deposited on the glass sheet at the laminator. In order to provide a ceramic image in the form of an array of dots, an intermittent layer of heat release agent in the form of an array of dots would be provided on the decal carrier, so that the only part of the decal deposited would be the part on the array of dots.

A further feature of the process method is that it allows curved decorated glass articles to be manufactured. The decal is deposited and fixed to a flat glass sheet. The flat glass sheet may then be formed in the tempering furnace without distortion of the image fixed thereto. In this way, tempered and decorated glass sheets of a particular shape may be manufactured, e.g. curved corner windows for offices or curved windscreens for cars. As the image is deposited on and secured to a flat sheet there is no distortion of the image when the sheet is formed into the desired shape and so the quality of the image is maintained.

## Claims

1. An automated method of decorating a face of a flat glass sheet, including the steps of:
continuously feeding glass sheets and heat release decals on a decal carrier to a laminating station;
applying heat to the decal carrier so as to simultaneously release the decal from the carrier and deposit the decal on an exposed face of a respective sheet of glass continuously passing through the laminating station;
continuously transferring decal-deposited glass sheets to a decal-securing oven;
slowly heating the glass sheets to a predetermined temperature so as to remove all binding agents from the decal and to fix the decals to the glass sheets thereby decorating the glass sheets.

2. A method as claimed in claim 1, in which the predetermined temperature is such as to fix the decals to the glass sheets so as to fuse the decals to the glass sheets and cure the decal so as to gloss up the colours of the decal.

3. A method as claimed in claim 1, and including the steps of:
slowly cooling the decorated sheets in the decal securing oven; and
continuously feeding decorated glass sheets to a tempering furnace and rapidly heating and cooling the decorated glass sheets so as to temper the decorated glass sheets, fuse the decals to the glass sheets and cure the decal so as to gloss up the colours of the decal.

4. A method as claimed in any preceding claim, and including the step of pre-heating the glass sheets so that the glass sheets have a predetermined temperature when the decals are deposited on them so as to enhance adherence of the decals to the glass sheets.

5. A method as claimed in any preceding claim, in which the decals deposited on the glass sheets are perforated so that the decorated glass is substantially transparent when viewed in one direction and substantially opaque when viewed in the opposite direction.

6. A method as claimed in claim 5, in which the decals on the decal carrier are perforated.

7. A method as claimed in claim 5, in which the decals become perforated as the decals are removed from the decal carrier and are deposited on the glass sheets.

8. A method as claimed in any one of claims 1 to 4, and including the step of coating the glass sheet with an intermittent layer of heat release agent in a predetermined pattern and onto which the decal is deposited so that when the glass sheet is heated in the decal securing oven, the heat release agent prevents part of the decal from fusing to the glass sheet so as to provide a decorated glass sheet which is substantially transparent when viewed in one direction and substantially opaque when viewed in the opposite direction.

9. A method as claimed in claim 8, in which the heat release agent is heat activated to remove part of the decal after the decal has fused by evaporating through the fused decal.

10. A method as claimed in claim 8, in which the heat release agent allows part of the decal to be removed after the decal has fused by preventing the decal from adhering directly to the surface of the glass sheet.

11. A method as claimed in claim 10, in which part of the decal is removed by dissolving the heat release agent.

12. A method as claimed in any of claims 8 to 11, in which the heat release agent is a wax with a melting or evaporation temperature higher than the fusing temperature of the decal.

13. A method as claimed in any of claims 1 to 4, and including the step of providing decals having an intermittent layer of heat release agent having a predetermined pattern so that when the decal is heat released from the decal carrier only part of the whole decal on the decal carrier is deposited on the glass sheet so that the deposited decal renders the glass sheet substantially transparent when viewed in one direction and substantially opaque when viewed in the opposite direction.

14. An automated decorated glass sheet production line for decorating a face of a glass sheet comprising:
glass feeding means for feeding glass sheets successively to a laminating station;
decal feeding means for feeding heat release decals on a decal carrier to a laminating station;
a heating device arranged at said laminating station for receiving said decal carrier and each glass sheet and the heating device being operable simultaneously to effect heat release of a decal from the decal carrier and to deposit the decal on an exposed face of each respective glass sheet;
intermediate glass feeding means for feeding decal deposited sheets to a decal securing oven; and
heating means in said decal securing oven operative slowly to heat each decal deposited sheet to a predetermined temperature so as to remove all binding agents from the decal and fix the decal to the respective glass sheet and thereby decorate the sheet.

15. A production line as claimed in claim 14, in which the predetermined temperature is not more than approximately 520°C.

16. A production line as claimed in claim 14, in which the predetermined temperature is sufficient to fuse the decal to the glass sheets and cure the decal so as to gloss up the colours of the decal.

17. A production line as claimed in claim 15 or claim 16, and having a tempering furnace arranged downstream of said decal securing oven and having heating means for heating decorated glass sheets to a tempering temperature so as to temper the decorated glass sheets, fuse the decal to the glass sheets and cure the decal so as to gloss up the colours of the decal.

18. A production line as claimed in any of claims 14 to 17, and having:
an upstream pre-heating furnace for continuously receiving glass sheets and heating them to a pre-heating temperature and discharging pre-heated glass sheets to the glass transfer means, in which the pre-heating temperature is chosen so as to enhance adherence of the decals to the glass sheets.

19. A production line as claimed in claim 18, in which the preheating temperature is approximately 120°C.

20. A production line as claimed in any of claims 14 to 19, in which the heating device is a roller.

21. A production line as claimed in any of claims 14 to 20, in which the production line decorates glass sheets having a width of approximately 2.2m.

22. A production line as claimed in any of claims 14 to 21, in which the decal securing oven has a plurality of different levels, and having a lifting device preceding the decal securing oven which continuously accepts decal deposited glass sheets and transfers them to one of the plurality of different levels in the decal securing oven.

## Patentansprüche

1. Automatisiertes Verfahren zur Dekorierung einer Fläche einer flachen Glasscheibe, welches die Schritte einschließt:
kontinuierliche Zufuhr von Glasscheiben und durch Wärme freisetzbaren Abziehbildern auf einem Abziehbildträger zu einer Laminierungsstation;
Anwenden von Wärme auf den Abziehbildträger, um gleichzeitig das Abziehbild von dem Träger freizusetzen und das Abziehbild auf einer freiliegende Fläche einer Glasscheibe abzusetzen, die kontinuierlich durch die Laminierungsstation geleitet wird;
kontinuierliches Überführen der Glasscheiben mit dem abgesetzten Abziehbild in einen Abziehbildbefestigungs-Ofen;
langsames Erwärmen der Glasscheiben auf eine vorbestimmte Temperatur, um alle Bindemittel von dem Abziehbild zu entfernen und die Abziehbilder auf den Glasscheiben zu fixieren, wodurch die Glasscheiben dekoriert werden.

2. Verfahren nach Anspruch 1, in dem die festgelegte Temperatur derart ist, daß die Abziehbilder so auf den Glasscheiben fixiert werden, daß die Abziehbilder auf die Glasscheiben aufgeschmolzen werden und das Abziehbild gehärtet wird, um die Farben des Abziehbilds glänzend zu machen.

3. Verfahren nach Anspruch 1, welches die Schritte einschließt:
langsames Abkühlen der dekorierten Scheiben in dem Abziehbildbefestigungs-Ofen; und
kontinuierliche Förderung der dekorierten Glasscheiben in einen Temperofen und rasches Erwärmen und Abkühlen der dekorierten Glasscheiben, um die dekorierten Glasscheiben zu tempern, die Abziehbilder auf die Glasscheiben aufzuschmelzen und das Abziehbild zu härten, um die Farben des Abziehbilds glänzend zu machen.

4. Verfahren nach einem vorangehenden Anspruch, welches den Schritt der Vorerwärmung der Glasscheiben einschließt, so daß die Glasscheiben eine vorbestimmte Temperatur aufweisen, wenn die Abziehbilder auf ihnen abgesetzt werden, um die Haftung der Abziehbilder an den Glasscheiben zu erhöhen.

5. Verfahren nach einem vorangehenden Anspruch, in dem die auf den Glasscheiben abgesetzten Abziehbilder perforiert sind, so daß das dekorierte Glas im wesentlichen transparent ist, wenn es in einer Richtung betrachtet wird, und im wesentlichen opak ist, wenn es in der entgegengesetzten Richtung betrachtet wird.

6. Verfahren nach Anspruch 5, in dem die Abziehbilder auf dem Abziehbildträger perforiert sind.

7. Verfahren nach Anspruch 5, in dem die Abziehbilder perforiert werden, wenn die Abziehbilder von dem Abziehbildträger entfernt und auf den Glasscheiben abgesetzt werden.

8. Verfahren nach einem der Ansprüche 1 bis 4, welches den Schritt einschließt:
Beschichten der Glasscheibe mit einer Zwischenschicht aus Wärmetrennmittel mit einem festgelegten Muster, auf welcher das Abziehbild abgesetzt wird, so daß, wenn die Glasscheibe in dem Abziehbildbefestigungs-Ofen erwärmt wird, das Wärmetrennmittel verhindert, daß ein Teil des Abziehbilds auf die Glasscheibe aufschmilzt, um eine dekorierte Glasscheibe bereitzustellen, die im wesentlichen transparent ist, wenn sie in einer Richtung betrachtet wird, und im wesentlichen opak ist, wenn sie in der entgegengesetzten Richtung betrachtet wird.

9. Verfahren nach Anspruch 8, in welchem das Wärmetrennmittel durch Wärme aktiviert wird, um einen Teil des Abziehbilds, nachdem das Abziehbild geschmolzen ist, mittels Verdampfen durch das geschmolzene Abziehbild zu entfernen.

10. Verfahren nach Anspruch 8, in dem das Wärmetrennmittel gestattet, daß ein Teil des Abziehbilds entfernt wird, nachdem das Abziehbild geschmolzen ist, indem es verhindert, daß das Abziehbild direkt auf der Oberfläche der Glasplatte haftet.

11. Verfahren nach Anspruch 10, in dem ein Teil des Abziehbilds durch Auflösen des Wärmetrennmittels entfernt wird.

12. Verfahren nach einem der Ansprüche 8 bis 11, in dem das Wärmetrennmittel ein Wachs mit einer Schmelz- oder Verdampfungstemperatur ist, die höher als die Schmelztemperatur des Abziehbilds ist.

13. Verfahren nach einem der Ansprüche 1 bis 4, welches den Schritt einschließt:
Bereitstellen der Abziehbilder mit einer Zwischenschicht aus Wärmetrennmittel mit einem vorbestimmten Muster, so daß, wenn das Abziehbild von dem Abziehbildträger durch Wärme freigesetzt wird, nur ein Teil des ganzen Abziehbilds auf dem Abziehbildträger auf die Glasscheibe abgesetzt wird, so daß das abgesetzte Abziehbild die Glasscheibe im wesentlichen transparent macht, wenn sie in einer Richtung betrachtet wird, und im wesentlichen opak macht, wenn sie in der entgegengesetzten Richtung betrachtet wird.

14. Automatisierte Fertigungsstraße für dekorierte Glasscheiben, um eine Fläche einer Glasscheibe zu dekorieren, umfassend:
Glaszüfuhrmittel für die sukzessive Zufuhr von Glasscheiben zu einer Laminierungsstation;
Abziehbildzufuhrmittel für die Zufuhr von durch Wärme freisetzbaren Abziehbildern auf einem Abziehbildträger zu einer Laminierungsstation;
eine Erwärmungseinrichtung, die an der Laminierungsstation angeordnet ist, zur Aufnahme des Abziehbildträgers und jeder Glasscheibe, wobei die Erwärmungseinrichtung gleichzeitig so betreibbar ist, daß sie die Freisetzung eines Abziehbilds mittels Wärme von dem Abziehbildträger bewirkt und das Abziehbild auf einer freiliegenden Fläche jeder entsprechenden Glasscheibe absetzt;
Zwischen-Glaszufuhrmittel für die Zufuhr von Scheiben, auf denen Abziehbilder abgesetzt sind, zu einem Abziehbildbefestigungs-Ofen; und
Erwärmungsmittel in dem Abziehbildbefestigungs-Ofen, die so betrieben werden, daß sie langsam jede Scheibe mit abgesetztem Abziehbild auf eine vorbestimmte Temperatur erwärmen, um alle Bindemittel von dem Abziehbild zu entfernen und das Abziehbild auf der Glasplatte zu fixieren und dadurch die Platte zu dekorieren.

15. Fertigungsstraße nach Anspruch 14, bei der die vorbestimmte Temperatur nicht mehr als etwa 520° C beträgt.

16. Fertigungsstraße nach Anspruch 14, bei der die vorbestimmte Temperatur ausreichend ist, um das Abziehbild auf die Glasscheiben aufzuschmelzen und das Abziehbild zu härten, um die Farben des Abziehbilds glänzend zu machen.

17. Fertigungsstraße nach Anspruch 15 oder Anspruch 16 mit einem Temperofen, der stromabwärts des Abziehbildbefestigungs-Ofens angeordnet ist und Erwärmungsmittel zum Erwärmen der dekorierten Glasscheiben auf eine Tempertemperatur aufweist, um die dekorierten Glasscheiben zu tempern, das Abziehbild auf die Glasplatten aufzuschmelzen und das Abziehbild zu härten, um die Farben des Abziehbilds glänzend zu machen.

18. Fertigungsstraße nach einem der Ansprüche 14 bis 17 mit:
einem stromaufseitigen Vorerwärmungsofen für die kontinuierliche Aufnahme von Glasscheiben und ihre Erwärmung auf eine Vorerwärmungstemperatur und Übergeben der vorerwärmten Glasscheiben zu dem Glasfördermittel, wobei die Vorerwärmungstemperatur so gewählt ist, daß sie die Haftung der Abziehbilder an den Glasscheiben erhöht.

19. Fertigungsstraße nach Anspruch 18, bei welcher die Vorerwärmungstemperatur etwa 120° C beträgt.

20. Fertigungsstraße nach einem der Ansprüche 14 bis 19, bei welcher die Erwärmungseinrichtung eine Walze ist.

21. Fertigungsstraße nach einem der Ansprüche 14 bis 20, bei welcher die Fertigungsstraße Glasscheiben mit einer Breite von etwa 2,2 m dekoriert.

22. Fertigungsstraße nach einem der Ansprüche 14 bis 21, bei welcher der Abziehbildbefestigungs-Ofen eine Mehrzahl von verschiedenen Ebenen aufweist und eine Lifteinrichtung aufweist, die dem Abziehbildbefestigungs-Ofen vorangestellt ist und kontinuierlich Glasscheiben mit darauf abgesetztem Abziehbild aufnimmt und sie zu einer der Mehrzahl von verschiedenen Ebenen in dem Abziehbildbefestigungs-Ofen überführt.

## Revendications

1. Procédé automatisé de décoration d'une face d'une plaque de verre plate, comprenant les étapes qui consistent à :
alimenter en continu, dans un poste à stratifier, des plaques de verre et des décalcomanies se détachant sous l'effet de la chaleur, placées sur un support de décalcomanies ;
appliquer de la chaleur sur le support de décalcomanies de manière à détacher la décalcomanie du support et à la déposer simultanément sur une face nue d'une plaque de verre correspondante traversant en continu le poste à stratifier ;
transférer en continu les plaques de verre sur lesquelles les décalcomanies ont été déposées, vers un four à fixer les décalcomanies
chauffer lentement les plaques de verre à une température prédéterminée de manière à retirer tous les agents liants des décalcomanies et à fixer ces dernières sur les plaques de verre pour décorer les plaques de verre.

2. Procédé selon la revendication 1, dans lequel la température prédéterminée est calculée pour fixer les décalcomanies sur les plaques de verre en faisant fondre les décalcomanies sur les plaques de verre et pour faire durcir les décalcomanies afin de faire briller les couleurs des décalcomanies.

3. Procédé selon la revendication 1, comprenant les étapes qui consistent à :
faire lentement refroidir les plaques décorées dans le four à fixer les décalcomanies ; et
acheminer en continu les plaques de verre décorées vers un fourneau de recuisson et rapidement chauffer et refroidir les plaques de verre décorées afin de tremper les plaques de verre décorées, faire fondre les décalcomanies sur les plaques de verre et faire durcir les décalcomanies pour faire briller les couleurs des décalcomanies.

4. Procédé selon l'une quelconque des revendications précédentes, et comprenant l'étape qui consiste à pré-chauffer les plaques de verre afin que les plaques de verre soient à une température prédéterminée lorsque les décalcomanies sont déposées sur elles, afin d'améliorer l'adhérence des décalcomanies sur les plaques de verre.

5. Procédé selon l'une quelconque des revendications précédentes, dans lequel les décalcomanies déposées sur les plaques de verre sont perforées afin que le verre décoré soit sensiblement transparent, lorsqu'il est vu dans une direction, et sensiblement opaque lorsqu'il est vu dans la direction opposée.

6. Procédé selon la revendication 5, dans lequel les décalcomanies présentes sur le support de décalcomanies sont perforées.

7. Procédé selon la revendication 5, dans lequel les décalcomanies deviennent perforées lorque les décalcomanies sont retirées du support de décalcomanies et sont déposées sur les plaques de verre.

8. Procédé selon l'une quelconque des revendications 1 à 4, et comprenant l'étape qui consiste à enduire la plaque de verre d'une couche intermédiaire d'agent à dégagement sous l'effet de la chaleur, suivant un modèle prédéterminé, sur laquelle la décalcomanie est déposée afin que, lorsque la plaque de verre est chauffée dans le four à fixer les décalcomanies, l'agent à dégagement sous l'effet de la chaleur empêche une partie de la décalcomanie de fondre sur la plaque de verre afin de produire une plaque de verre décorée qui soit sensiblement transparente, lorsqu'elle est vue dans une direction, et sensiblement opaque lorsqu'elle est vue dans la direction opposée.

9. Procédé selon la revendication 8, dans lequel l'agent à dégagement sous l'effet de la chaleur est activé thermiquement afin de retirer une partie de la décalcomanie, une fois que la décalcomanie a fondu, par évaporation à travers la décalcomanie fondue.

10. Procédé selon la revendication 8, dans lequel l'agent à dégagement sous l'effet de la chaleur permet à une partie de la décalcomanie d'être retirée une fois que la décalcomanie a fondu, en empêchant la décalcomanie d'adhérer directement à la surface de la plaque de verre.

11. Procédé selon la revendication 10, dans lequel une partie de la décalcomanie est retirée en dissolvant l'agent à dégagement sous l'effet de la chaleur.

12. Procédé selon l'une quelconque des revendications 8 à 11, dans lequel l'agent à dégagement sous l'effet de la chaleur est une cire dont la température de fusion ou d'évaporation est supérieure à la température de fusion de la décalcomanie.

13. Procédé selon l'une quelconque des revendications 1 à 4, et comprenant l'étape qui consiste à fournir des décalcomanies présentant une couche intermédiaire d'agent à dégagement sous l'effet de la chaleur, suivant un modèle prédéterminé, de telle sorte que, lorsque la décalcomanie est détachée, sous l'effet de la chaleur, du support de décalcomanies, seule une partie de l'ensemble de la décalcomanie présente sur le support de décalcomanies soit déposée sur la plaque de verre afin que la décalcomanie déposée rende la plaque de verre sensiblement transparente, lorsqu'elle est vue dans une direction, et sensiblement opaque lorsqu'elle est vue dans la direction opposée.

14. Chaîne de production automatisée de plaques de verre décorées, destinée à décorer une face d'une plaque de verre, comprenant :
des moyens d'acheminement de verre destinés à acheminer successivement des plaques de verre vers un poste à stratifier ;
des moyens d'acheminement de décalcomanies destinés à acheminer des décalcomanies se détachant sous l'effet de la chaleur sur un support de décalcomanies vers un poste à stratifier ;
un dispositif chauffant monté au niveau du poste à stratifier pour recevoir le support de décalcomanies et chaque plaque de verre, le dispositif chauffant pouvant simultanément entraîner le détachement, sous l'effet de la chaleur, d'une décalcomanie, du support de décalcomanies et le dépôt de la décalcomanie sur une face nue de chaque plaque de verre respective ;
des moyens intermédiaires d'acheminement du verre, destinés à acheminer les plaques sur lesquelles les décalcomanies ont été déposées vers un four à fixer les décalcomanies ; et
des moyens chauffants, présents dans le four à fixer les décalcomanies, servant à chauffer lentement chaque plaque de verre, sur laquelle une décalcomanie a été déposée, à une température prédéterminée de manière à retirer tous les agents liants de la décalcomanie et à fixer les décalcomanies sur les plaques de verre respectives pour décorer les plaques.

15. Chaîne de production selon la revendication 14, dans laquelle la température prédéterminée ne dépasse pas approximativement 520°C.

16. Chaîne de production selon la revendication 14, dans laquelle la température prédéterminée est suffisante pour faire fondre les décalcomanies sur les plaques de verre et pour faire durcir les décalcomanies afin de faire briller les couleurs des décalcomanies.

17. Chaîne de production selon la revendication 15 ou la revendication 16, comprenant un fourneau de recuisson monté en aval du four à fixer les décalcomanies, et des moyens chauffants pour chauffer les plaques de verre décorées à une température de trempe afin de tremper les plaques de verre décorées, faire fondre les décalcomanies sur les plaques de verre et faire durcir les décalcomanies afin de faire briller les couleurs des décalcomanies.

18. Chaîne de production selon l'une quelconque des revendications 14 à 17, comprenant :
un four de préchauffage en amont destiné à recevoir en continu des plaques de verre, à les chauffer à une température de préchauffage, et à décharger les plaques de verre préchauffées sur les moyens de transfert du verre, dans lequel la température de préchauffage est sélectionnée pour améliorer l'adhérence des décalcomanies sur les plaques de verre.

19. Chaîne de production selon la revendication 18, dans laquelle la température de préchauffage est d'approximativement 120°C.

20. Chaîne de production selon l'une quelconque des revendications 14 à 19, dans laquelle le dispositif chauffant est un rouleau.

21. Chaîne de production selon l'une quelconque des revendications 14 à 20, dans laquelle la chaîne de production décore des plaques de verre ayant une largeur d'approximativement 2,2 m.

22. Chaîne de production selon l'une quelconque des revendications 14 à 21, dans laquelle le four à fixer les décalcomanies comprend une pluralité de niveaux différents, et comprenant un dispositif de levage en amont du four à fixer les décalcomanies, qui accepte en continu les plaques de verre sur lesquelles les décalcomanies ont été déposées et les transfère vers l'un des différents niveaux du four à fixer les décalcomanies.
